# EUROPEAN PATENT APPLICATION

(11) **EP 0 857 640 A2**
(43) Date of publication of application: **12.08.1998**
(21) Application number: 98300498.7
(22) Date of filing: 26.01.1998
(51) Int. Cl.: B62D 11/08, G05G 9/047, B62D 1/12

(54) **A control apparatus**

(30) Priority: 10.02.1997 GB 9702675
(71) Applicant: Aeroquip-Vickers Limited, Havant, Hants PO9 2NB (GB)
(72) Inventor: Dawson, Clive George, Waterlooville, Hampshire PO9 0RY (GB); Bollero, Vincenzo Domenico, 10086 Rivarolo Canavese, Torino (IT)
(74) Representative: Powell, Timothy John

(57) **Abstract**

In the field of hydraulic vehicle control, it is known to provide joystick controllers. However, in the past such controllers have only provided a control signal the amplitude of which increases with movement of the joystick handle. This is unsuitable for controlling the steering of many vehicles.

The invention relates to a control apparatus (10) incorporating a pressure control capsule including a moveable spool (13) capable of developing supply fluid pressure (P) in an outlet (14). The actuator pin (25) of the capsule is operated by the underside of a rocker (54) pivotable about its mid-point (55). The opposite end of the rocker (54) is acted on by a pin (30) connectable to one operator pad (102) of a joystick controller. This provides a reduction in the pressure developed in the outlet (14) with increasing joystick movement.

The arrangement allows space in the housing (11) of the apparatus for a further function (91) operable via the joystick. In the preferred embodiment, the additional function (91) includes a joystick detent operable via a switchable electromagnet (84).

## Description

This invention relates to a control apparatus, suitable in particular (but not exclusively) for controlling the operation of a bulldozer, excavator, snowmobile, tractor or similar vehicle.

Conventionally in such vehicles there are provided two remote control levers for selection of forward and reverse travel; and left or right steering, respectively.

Each such lever has only a single degree of freedom and includes a linkage engageable with a fluid power control device such as a spool valve. The lever for selecting forward and reverse gears has a neutral position at the mid-point of its travel. Pushing the lever forwardly opens a fluid supply port that causes engagement of a forward gear; and pulling the level rearwardly similarly causes engagement of a reverse gear.

The arrangement of the lever for controlling steering is similar. Moving the lever to one side of a central, neutral position causes operation of an hydraulic actuator that progressively disengages a drive clutch providing drive to one or other side of the vehicle. Slipping of the selected drive clutch causes steering of the vehicle towards the side of the slipping clutch.

Thus it is evident that during manoeuvring of a bulldozer or similar vehicle, the operator thereof must use both his hands to control the vehicle safely.

This requirement can under some circumstances increase the stress experienced by the operator of the bulldozer. Also, of course, it limits the number of tasks that the bulldozer operator can carry out whilst manoeuvring his vehicle.

It is known to provide a lever actuated control, having a single degree of freedom, that provides a smooth decrease in the pressure of hydraulic fluid at a supply port as the lever is moved away from a neutral position. Although such an arrangement is suitable for providing the steering function in a bulldozer, such a control apparatus does not in itself obviate the need for two-lever control of the manoeuvring of such vehicles.

It is known to provide a joystick controller capable of controlling the supply of hydraulic fluid at each of four supply ports simultaneously. However, the normal arrangement for a joystick controller is such that the pressure of fluid increases at one or more of the ports as the joystick handle is moved away from its neutral position. This arrangement is unsuitable for the steering of a bulldozer, in which it is necessary to reduce the pressure of hydraulic fluid acting on the control valve of a drive clutch on one or other side of the vehicle as the control lever is moved toward that side of the vehicle.

Also, known joysticks require manual force in order to maintain the selected pressure at any of the outlet ports.

Thus there is a need for a control apparatus that:
1. Permits single-handed driving of a bulldozer or similar vehicle;
2. Provides a smooth decrease in the pressure of hydraulic fluid supplied eg. to the drive clutches on one or other side of such a vehicle; and
3. Does not necessarily require manual force to maintain selection of at least some of the functions.

According to a first aspect of the invention there is provided a control apparatus comprising:
a valve moveable from a neutral position in which it provides pressured fluid, from a source of pressurized fluid, at an outlet;
a selectively moveable actuator member for acting on the valve whereby to permit its movement from its neutral position;
the actuator member being biassed to tend to maintain the neutral position of the valve; and
means for applying a force to the actuator member to overcome the bias, the location of application of the force being spaced from the location at which the actuator member acts on the valve.

This arrangement advantageously permits the construction of a device that permits reduction of the port pressure as a control lever or similar device moves away from a neutral setting, yet which is sufficiently compact that additional functions may be incorporated within a housing for the device. From such an arrangement it is possible to construct a single lever (joystick) controller for the steering and gear selection of a bulldozer.

Preferably the apparatus includes a resilient biassed member engageable with the actuator member whereby to bias it. This feature advantageously tends to return the valve to its neutral position in a convenient, efficient manner.

Preferably the actuator member is a rocker arm having a valve moving portion for moving the valve; a force receiving portion on which the force member acts; and a pivot, the relative positions of the valve moving portion, the force receiving portion and the pivot being such that the application of a force via the said means tends to reduce the pressure of fluid at the outlet.

This is a conveniently economical means of providing controlled reduction in the pressure of fluid at the outlet, for controlling the degree of engagement of the drive clutches at one side the vehicle.

Conveniently the means for applying a force includes a link member engageable with the actuator member. This is advantageously simple to manufacture. In particularly preferred embodiments, the link member is configured as a pin.

Preferably the link member and actuator member define a cam and follower for transferring movement of the link member to the valve. This is an advantageously reliable construction.

In practical embodiments, the link member engages an operating pad of a joystick handle, which preferably is secured to the control apparatus eg. by means of screws or other fixings. This provides a practical means of operating the control apparatus.

Conveniently, the valve may be biassed away from its neutral position, which biassing is in preferred embodiments overcome by biassing of the actuator member whereby to confer on the valve a net bias towards its neutral position. In particular, it is preferable for the control apparatus to include one or more resilient members acting on the valve to bias it.

Conveniently the biassing force of the main valve increases as the valve approaches its fully actuated position. This feature is beneficial because it provides a degree of "feel" in operation of the control apparatus.

The preferred construction of the resiliently biassed member includes a piston operatively engageable with the actuator member, the piston being acted on by fluid at outlet pressure whereby to modify the biassing of the actuator member in dependence on the pressure of fluid at the outlet.

Such an arrangement advantageously minimise the effort needed to operate the control apparatus.

This arrangement reduces the increases in the biassing force, resulting from changes in spring forces and outlet pressure, that would otherwise be experienced by an operator as the apparatus is operated.

This biassing arrangement may also include a resiliently deformable member (particularly a spring) acting on the resiliently biassed member, wherein the biassing force decreases as the valve moves towards its neutral position.

The control apparatus also may conveniently include a further actuator moveable to operate a switch. Such an arrangement advantageously provides a further function within the apparatus. Thus it is possible to provide an apparatus according to the invention in which an outlet port supplies hydraulic fluid for control of the steering of one side of a vehicle; and the switch of which permits selection of one or other of the forward and reverse gears.

Preferably the further actuator includes a further link member moveable between an initial position and a switch operating position, the apparatus including a releasable detent for holding the further link member in its switch operating position.

These features permit the selection of a further function such as forward or reverse travel of the vehicle in such a way that the need for continuous manual force on an actuator lever is obviated.

In preferred embodiments the releasable detent is or includes an electromagnet. Such a detent has the advantages that, firstly; its effect can readily be overcome by manual pressure in order to disengage the further function; and, secondly, that the detent can be switched off eg. when the ignition of the vehicle is switched off. This has the advantage that the forward/reverse selector of the vehicle automatically returns to a neutral setting when the vehicle is switched off.

Preferably the further link member engages an operating pad of a joystick handle that may, in the manner aforesaid, be secured to the control apparatus.

Preferably the apparatus includes a common housing for the valve, actuator member, biassing actuator, moveable link member, further actuator and switch. This confers an advantageously compact configuration on the apparatus.

In particularly preferred embodiments, the valve and resiliently biassed member lie adjacent one another; the actuator member overlies the valve and resiliently biassed member for operative engagement with both the aforesaid components; and the means for applying a force overlies the actuator member. This arrangement has a significant effect in minimising the overall dimensions of the control apparatus.

The further actuator may conveniently overlie the valve. This also minimises the dimensions of the apparatus.

A practical embodiment of the invention is configured as a remote controller comprising a pair of control apparatuses each as defined hereinabove, secured side by side. It will be appreciated that since each control apparatus according to the invention is capable of providing controlled fluid pressure to one port, and of controlling the operation, via its further actuator (where present), of a switch, the use of a pair of control apparatuses according to the invention provides fluid control through two outlets; and control of the operation of two switches. In such an arrangement the two switches may respectively be configured to engage forward and reverse gears of the vehicle gearbox; and the two fluid outlet ports may be used to control the drive clutches to either side of the vehicle.

If a single, joystick handle having four pads is operatively secured to such a remote controller, the whole provides a convenient, single-handed control device for a vehicle such as a bulldozer.

Preferably, the remote controller includes a common pivot for the respective rocker arms. This feature is advantageously compact.

There now follows a description of a preferred embodiment of the invention, by way of example, with reference being made to the accompanying drawings in which:
Figure 1 is a cross-sectional view of a control apparatus according to the invention;
Figure 2 is a view on line 2-2 of Figure 1;
Figure 3 shows a joystick handle suitable for use with the apparatus of Figures 1 and 2;
Figure 4 shows a detail of the joystick handle; and
Figure 5 is a plot of the output signal from the outlet port of the apparatus of Figure 1.

Referring to the drawings there is shown a vertical section through a remote controller 10 incorporating a pair of control apparatuses according to the invention.

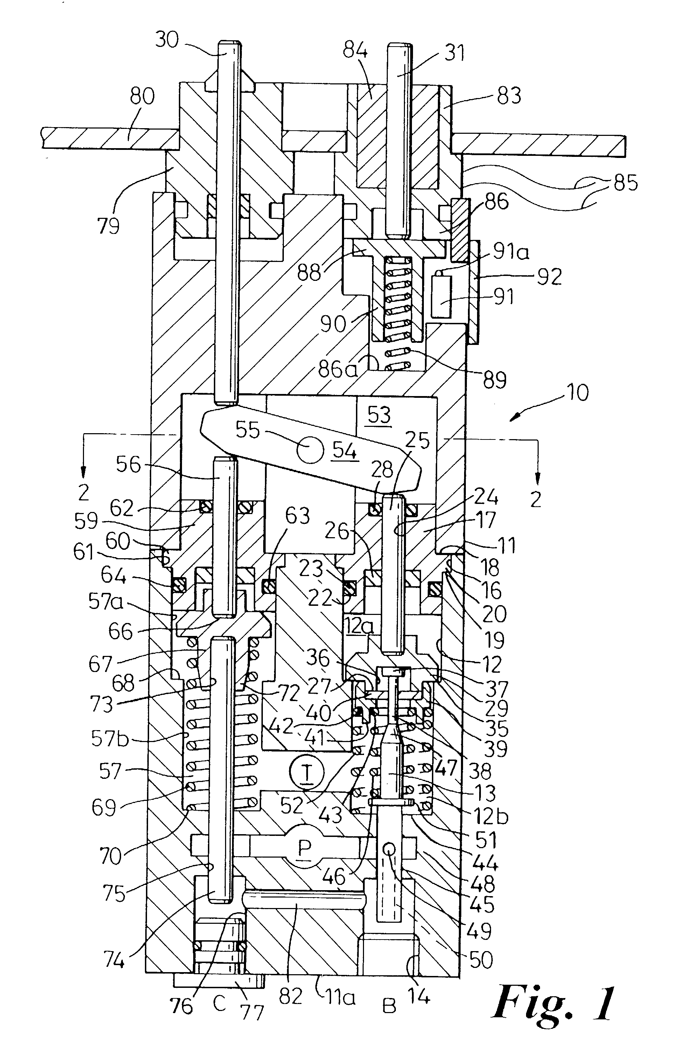

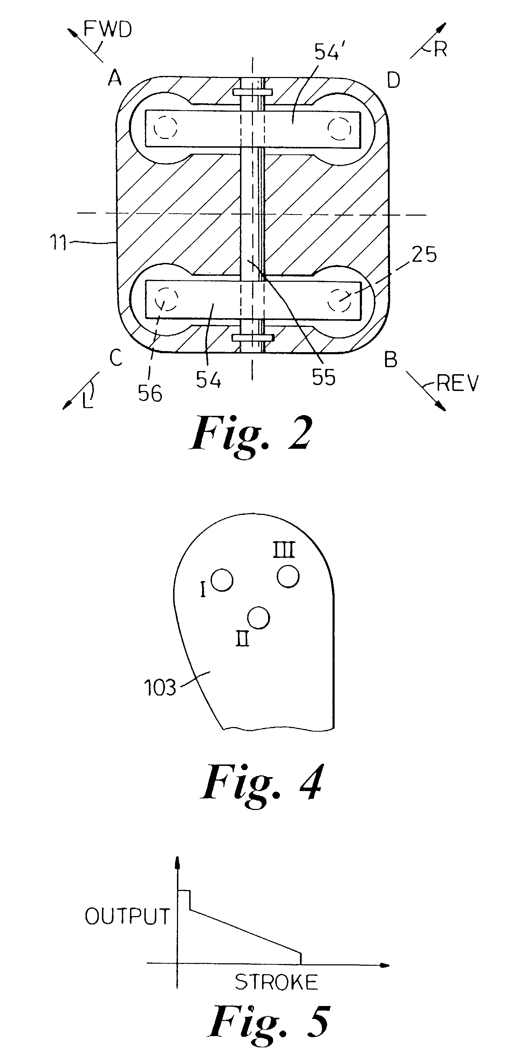

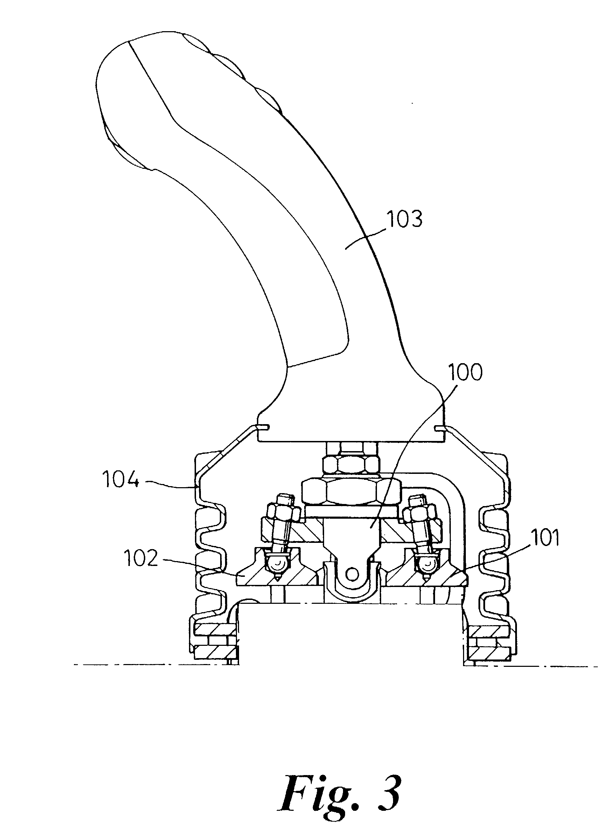

Only one of the control apparatuses is shown in Figure 1; the other control apparatus is a mirror image of the Figure 1 arrangement disposed to form a symmetrical arrangement as visible in Figure 2.

The remote controller of the invention includes a housing 11 that encloses almost all the components thereof, with the exception of link members 30 and 31 the functions of which are described below.

Housing 11 is an elongate, square-section construction notionally comprising four quadrants A, B, C and D as shown by dotted lines in Figure 2. Quadrants B and C are visible in Figure 1.

Quadrant B comprises, towards the lower end of housing 11, an elongate, cylindrical chamber 12 the diameter of which varies along its length. Chamber 12 accommodates a spool 13 slidable therein to control the pressure of fluid at an outlet port 14 formed in the lower end 11a of housing 11 when it is oriented as shown in Figure 1.

The upper end of chamber 12 includes an annular groove 16 formed in the wall thereof for securely receiving within chamber 12 a plug member 17. Groove 16, which is formed at the joint between two sub-components of housing 11, defines an opposed pair of shoulders 18,19 spaced one from another by a distance equal to the thickness of an annular flange 20 formed on the outer surface of plug member 17.

Plug member 17 is, below flange 20, of a diameter substantially equal to the diameter of the adjacent portion of chamber 12. The outer surface of plug member 17 includes a further annular groove 22 having received therein an O-ring seal 23 in sealing engagement with the adjacent wall of chamber 12. Thus, by virtue of flange 20 and shoulders 18,19, plug member 17 is securely retained at the upper end of chamber 12; and O-ring 23 provides a fluid-tight seal between plug member 17 and the wall of chamber 12.

Plug member 17 includes a through-going bore 24. A link member in the form of rod 25 is slidingly received in bore 24. Leakage of hydraulic fluid via bore 24 is prevented by further seal 26 and wiper ring 28 received in respective recesses at the lower and upper ends of bore 24 to seal between plug member 17 and slidable pin 25.

The lower end of pin 25 is received in a central, annular recess formed in the upper end of a cap 29 for spool 13 disposed in an upper portion 12a of chamber 12. Cap 29 is a disc-like member of a diameter slightly smaller than the diameter of chamber 12 between plug member 17 and a further shoulder 35 formed approximately half way along chamber 12. Cap member 29 is therefore slidable in the portion 12a of chamber 12.

The underside of cap member 29 includes a further, central, circular recess 36 that receives the upper end of spool 13. The upper end of spool 13 terminates in a pad 37 from which a reduced diameter portion 38 of spool 13 extends downwardly. An annular collar 39, having a downwardly extending face from which extends downwardly an annular wall 41 that defines two further, concentric, annular shoulders 42,43 in the underside of collar 39, surrounds the reduced diameter portion of spool valve 13. A washer 40 lies between cap 29 and collar 39. The central aperture of washer 40 is less than the diameter of pad 37.

Reduced diameter portion 12b of chamber 12 lies below portion 12a and terminates in chamber end wall 44. A through-going bore 45 links chamber portion 12b and outlet 14.

The diameter of spool 13 enlarges in chamber 12b by means of chamfer 47 to a diameter that is a sliding fit in bore 45. Spool 13 extends along the length of bore 45 into outlet 14.

Housing 11 includes a fluid supply port P formed in a central portion of the material of housing 11. Supply port P supplies fluid under pressure to an annular chamber 48, encircling spool 13, that is effectively an enlarged-diameter portion of bore 45.

A bore 49 extends transversely of spool 13 from the exterior thereof to its centre. Transverse bore 49 communicates with the free end of spool 13 in outlet 14 by means of a longitudinal bore 50 shown in dotted lines in Figure 1.

A compression spring 52 acts between outer annular shoulder 42 of collar 39 and end wall 44 of chamber 12.

A further collar 51 is fixedly secured about spool 13 adjacent the lower end of chamber 12b.

A further compression spring 46 acts between collar 51 and shoulder 43 of collar 39.

The depth of recess 36 is greater than the depth of pad 37.

As is evident from Figure 1, when transverse bore 49 enters into bore 45, spool 13 is fully stroked downwards and fluid at supply pressure flows from supply port P via bores 49 and 50 to be available at outlet 14 to operate a load such as the steering clutch of a bulldozer. Upward movement of spool 13 from the position shown in Figure 1 leads to venting of pressure in outlet 14, via bores 50 and 49 and chamber 12b, to tank port T. The movement of spool 13 is described below.

The upper end of pin 25 protrudes upwardly from plug member 17 into a large annular chamber 53 disposed substantially centrally within housing 11. A rocker member 54 is mounted centrally in chamber 53 for pivoting movement about pivot shaft 55 extending therethrough. Pivot shaft 55 is journalled at either end in the walls of chamber 53 constituted by housing 11. The upper end of rod 25 engages the underside of rocker 54.

A further pin 56 engages the underside of the end of rocker 54 opposite to pin 25, and extends downwardly therefrom into an annular chamber 57 containing a biassing assembly.

Pin 56 is sealingly, slidably received in a plug member 59 similar to plug member 17. Plug member 59 is secured in the upper end of chamber 57 by means of an annular flange 60 received in an annular groove 61. Wiper ring 62 and seal 64 perform a similar function relative to plug member 59 as do O-ring seals 23 and 26 and wiper ring 28 with respect to plug member 17.

The lower end of pin 56 is received in an annular recess 66 formed in the upper end of a piston 67.

Piston 67 is slidingly received in upper, enlarged diameter portion 57a of chamber 57. Upper portion 57a terminates at its lower end in shoulder 68 that defines lower, reduced diameter portion 57b of chamber 57.

The diameter of the widest portion of piston 67 in upper portion 57a of chamber 57 is greater than the diameter of lower portion 57b, so that piston 67 is constrained to move in upper portion 57a only.

A compression spring 69 extends downwardly from the underside of piston 67, and engages at its lower end the end wall 70 of chamber 57.

Piston 67 includes annular wall 72 extending downwardly therefrom a short distance, to receive and guide compression spring 69. Annular wall 72 also defines a central recess 73 that receives a further pin 74 extending downwardly from the underside of piston 67.

Pin 74 is a sliding fit in through-going aperture 75 formed in housing 11 below wall 70. Through-going bore 75 opens into an enlarged diameter bore 76 similar to outlet 14, that is sealingly closed at its otherwise open end by plug 77.

The lowermost end of pin 74 extends into enlarged diameter portion 76.

A further pin 30 extends downwardly onto the upper surface of rocker 54 above the line of action of pin 56.

Pin 30 extends through the upper end wall of housing 11 and through a gland 79 itself secured in an end plate 80 of the control apparatus.

A transverse bore 82 interconnects outlet 14 and chamber 76. Thus the fluid pressure in outlet 14 acts against the free end of pin 74.

There now follows a description of the operation of the components shown in Figure 1 described thus far.

The components of Figure 1 are shown in their initial or neutral configuration, ie. in the absence of any downward force (from a joystick handle as described below) acting on pins 30 and 31.

The spring force applied to piston 67 by spring 69 is greater than the force applied to piston 29 by spring 52. Therefore the left hand end of rocker arm 54 is biassed upwardly to the orientation shown in Figure 1 when no force acts downwardly on pin 30. This in turn applies a downward force to pin 25. The force on pin 25 urges piston 29 downwardly so that the underside of recess 36 engages the top of pad 37. Thus spool 13 is also driven downwardly so that bore 49 overlaps with chamber 48. In this configuration the full supply pressure is developed in outlet 14, via bores 49 and 50. Thus a steering clutch control valve controlled by outlet 14 is maintained in a fully engaged state.

When a sufficient downward force is applied to pin 30 to overcome the net upward bias from springs 52 and 69, pin 30 moves downwardly and rocker arm 54 pivots in an anti-clockwise direction about pivot shaft 55, ie. so as to raise the right hand end of rocker arm 54. This permits piston 29 to rise in chamber 12a, by virtue of the force from spring 52. The result of this action is for washer 40 to rise relative to pad 37. If, by virtue of depression of pin 30, piston 29 rises less than the difference in depth between pad 37 and washer 40, piston 29 remains disengaged from pad 37. As a result spool 13 is subject to forces from (i) spring 46 and (ii) fluid pressure acting on its free end in outlet 14. Thus, depending on the force applied by spring 46, on initial raising of piston 29 spool 13 is driven upwardly against the downward bias of spring 46, until it reaches an equilibrium. Under such circumstances the position of spool 13 is determined by the balance of the force from spring 46 and the force from the pressure at outlet 14.

If the pressure at outlet 14 exceeds the spring force, spool 13 rises until bore 49 overlaps the edge of end wall 44 with the result that pressure from outlet 14 exhausts to tank T via bores 50 and 49 and chamber 12b. This causes a decay in the pressure at outlet 14 until the force of spring 46 is sufficient to close the path between outlet 14 and tank T.

Further upward movement of piston 29 allows elongation of spring 46, thereby reducing the force it applies to spool 13 via collar 51. This causes a further reduction in the pressure at outlet 14, again by venting to tank T. Thus the pressure maintained in outlet 14 is determined by the position of piston 29, and hence of pin 30.

If pin 30 is fully depressed, the washer 40 engages the underside of pad 37, thereby drawing spool upwardly against the force of spring 46 to vent outlet 14 to tank T. Since the spool 13 is no longer in equilibrium, the path between outlet 14 and tank T remains permanently open and the pressure at outlet 14 rapidly decays. This is equivalent to selection of a full steering function in one direction of steering of the vehicle in which the control apparatus is installed.

Releasing of pin 30 causes the control apparatus to revert to the Figure 1 configuration, under the action of spring 69. Pressure then rapidly restores to its maximum valve in outlet 14.

The connection of outlet 14 to pin 74 via bore 82 means that the total biassing force applied by pin 56 is dependent in part on the pressure developed in outlet 14. This is an advantageous feature since it offsets the tendency of the force from spring 69 to increase as it compresses during reduction of pressure in outlet 14.

As illustrated, pin 30 extends part way along quadrant C and acts on rocker 54 at a point offset from pivot shaft 55. Furthermore, the downward force provided by pin 30 acts on the opposite (ie. upper) side of rocker 54 to that engaged by pin 25. This is a convenient method by which actuation of pin 30 in a downward direction causes progressive unloading of spool 13.

The offsetting of pin 30 into quadrant C provides space in quadrant B above spool 13 and pin 25 for the installation of further pin 31 that extends downwardly through an annular electromagnet 84. Pin 31 passes slidingly through a central aperture in electromagnet 84.

Electromagnet 84 is selectively energizable by means of e.g. a 24 volt DC electrical supply illustrated schematically by cables 85 in Figure 1.

The lower end of pin 31 extends into a chamber 86 formed in an upper portion of quadrant B. The free, lower end of pin 31 contacts the upper surface of an actuator plate 88 that is urged into contact with pill 31 by means of a compression spring 89 acting between its underside and the lower, end wall 86a of chamber 86.

An annular sleeve 90 extends downwardly from the underside of plate 88 to enclose and guide spring 89.

A microswitch 91 of *per se* known design is mounted within housing 11 adjacent chamber 86. A cover 92 is provided for the microswitch. The actuator member 91a of microswitch 91 lies in the path of plate 88 in chamber 86. Thus downward movement of plate 88 occasioned by the application of a downward force to pin 31 causes operation of microswitch 91.

As an alternative to microswitch 91, other kinds of switch, such as an inductive proximity switch or even an optical switch may be used.

The dimensions and relative spacings of the electromagnet 84, pin 31, plate 88 and microswitch 91 are such that limited downward movement of pin 31 causes unlatched actuation of microswitch 91 (so that on the operator ceasing to cause depression of pin 31 the restoring force of spring 89 causes it to return upwardly to its at rest position). Further downward movement of pin 31 brings pad 102 into the magnetic field of electromagnet 84, so that the detent function occurs.

As indicated in Figure 2, a control apparatus as shown in Figure 1 is secured in housing 11 adjacent a further such apparatus that is a mirror image of the apparatus of Figure 1. Pivot shaft 55 is common to the two sets of apparatus, and there is provided a further rocker 54' at the opposite side of housing 11 to that of rocker 54.

Quadrant A of Figure 2 accommodates components equivalent to pin 31 and spool 13 of Figure 1; while quadrant D of Figure 2 accommodates components equivalent to pin 30 and the biassing actuator of Figure 1.

It will thus be appreciated that a conventional joystick handle as shown in Figure 3, having a central, universal joint 100 and four pads (of which two 101,102 are visible in Figure 3) swivellingly secured to universal joint 100, may be used to operate the controller of Figure 2. Each of the pads of the joystick handle has a downwardly directed face that engages the upper end of each rod 30,31 and their equivalents in quadrants A and D.

Universal joint 100 is secured in a conventional manner to a grip handle 103. A flexible gaiter 104 surrounds universal joint 100 and clips onto the upper end of remote controller 10 in a *per se* known manner to prevent ingress of dust and drying of lubricant from the joystick.

Port 14 of Figure 1 is in use of the application connected to the left hand steering clutch of a bulldozer, such that in the absence of a force applied to pin 30 by joystick handle 103 the valve defined by spool 13 is fully downwardly stroked, thereby maintaining full engagement of the left hand steering clutch and providing full drive the left hand wheels or tracks of the vehicle.

Similarly, the corresponding port at the base of quadrant A of Figure 2 is connected to the steering clutch of the right hand side of the vehicle. Thus in the absence of a force applied to the equivalent of pin 30 present in quadrant D of Figure 2, drive to the right hand side of the vehicle is also fully selected. Working of the joystick handle in the directions of arrows L and R therefore selectively causes steering of the vehicle to the left and the right respectively. Since the pins 30 for causing steering to the left and right are respectively located in quadrants C and D that are diametrically opposed in remote controller 10, it is impossible to attempt to steer to the left and to the right simultaneously.

Movement of the joystick handle in the direction of the arrow REV in Figure 2 causes actuation of microswitch 91, thereby selecting a reverse gear in a gear box mounted in the vehicle. Since at this time electromagnet 84 is energized via cables 85, selection of this function by moving the handle as far as possible in the direction REV is maintained until the joystick handle 103 is deliberately returned to a neutral position relative to pin 31, which then rises under the action of spring 89 to switch off microswitch 91 and thereby deselect the reverse gear function.

The equivalent components disposed in quadrant A of Figure 2 achieve an analogous effect in selecting forward motion of the vehicle on movement on the joystick in the direction of the arrow FWD in Figure 2.

Since the electromagnet 84 (or its equivalent in quadrant A) has a detent function, the driver of a vehicle may simply select forward or reverse gear using the joystick handle, and subsequently only be concerned with movements of the handle towards the directions L and R to steer the vehicle when it is in motion. There is no need for the driver to maintain manual force in the FWD or REV direction to maintain engagement of drive.

As shown in Figure 4, the joystick handle 103 may be supplied with electrical control buttons I, II, III that may be used to select combinations of planetary gears in the gear box by means of actuators. Such use of buttons I, II and III may be used to adjust the final drive of the gearbox, thereby defining the speed range of the vehicle according to the operator's preference.

Figure 5 shows a plot of the output of each port 14 against the stroke of the pin 30. As is shown in Figure 5, the apparatus of the invention provides a progressive decrease in the pressure at port 14 with increasing movement of joystick handle 103 towards arrow L in Figure 2. A similar graph may be plotted for the output of the equivalent outlet to outlet 14 that is present in quadrant A. Since the steering clutches employed are biased by clutch springs or similar mechanisms to tend to disengage, it is only when the joystick occupies a neutral position that all clutches are fully engaged by virtue of full supply pressure being developed in the outlet 14.

The choice of the spring forces within the housing 11, and the use of the pressure tapping 82, provide feel to the joystick, thereby increasing the resistance of the joystick the further towards one of the arrows L and R that it is pushed by an operator.

## Claims

1. A control apparatus comprising:
a valve moveable from a neutral position in which it provides pressured fluid, from a source of pressurized fluid, at an outlet;
a selectively moveable actuator member for acting on the valve whereby to permit its movement from its neutral position;
the actuator member being biassed to tend to maintain the neutral position of the valve; and
means for applying a force to the actuator member to overcome the bias, the location of application of the force being spaced from the location at which the actuator member acts on the valve.

2. A control apparatus according to Claim 1 including a resiliently biassed member engageable with the actuator member whereby to bias it.

3. A control apparatus according to Claim 1 or Claim 2 wherein the actuator member is a rocker arm having a valve moving portion for moving the valve; a force receiving portion on which the force acts; and a pivot, the relative positions of the valve moving portion, the force receiving portion and the pivot being such that application of a force via the said means tends to reduce pressure of fluid at the outlet.

4. A control apparatus according to any preceding claim, wherein the means for applying a force includes a link member engageable with the actuator member.

5. A control apparatus according to Claim 4, wherein the link member and the actuator member define a cam and follower for transferring movement of the link member to the valve.

6. A control apparatus according to Claim 4 or Claim 5, wherein the link member engages an operating pad of a joystick handle.

7. A control apparatus according to any preceding claim including means biassing the valve away from its neutral position, and wherein the biassing of the actuator member is greater than the biassing of the valve whereby to confer on the valve a net bias towards its neutral position.

8. A control apparatus according to Claim 7 including one or more resilient members acting on the valve to bias it.

9. An apparatus according to Claim 5 or Claim 6, wherein the biassing of the valve increases as the pressure developed in the outlet reduces.

10. A control apparatus according to Claim 2 or any claim dependent therefrom, wherein the resiliently biassed member includes a piston operatively engageable with the actuator member, the piston being acted on by fluid at outlet pressure whereby to modify the biassing of the actuator member in dependence on the pressure of fluid at the outlet.

11. A control apparatus according to Claim 2 or any claim dependent therefrom, including a resiliently deformable member acting on the said member, wherein the biassing force decreases as the valve moves towards its neutral position.

12. A control apparatus according to any preceding claim including a further actuator moveable to operate a switch.

13. A control apparatus according to Claim 12 wherein the further actuator includes a further link member moveable between an initial position and a switch operating position, the apparatus including a releasable detent for holding the further link member in its switch operating position.

14. A control apparatus according to Claim 13 wherein the releasable detent is or includes an electromagnet.

15. An apparatus according to Claim 14 or Claim 15 when dependent from Claim 13, wherein the further link member engages an operating pad of a joystick handle.

16. A control apparatus according to Claim 12 or any claim dependent therefrom, including a common housing for the valve, actuator member, biassing actuator, moveable link member, further actuator and switch.

17. A control apparatus according to Claim 2 or any claim dependent therefrom, wherein the valve and resiliently biassed member lie adjacent one another; the actuator member overlies the valve and resiliently biassed member for operative engagement therewith; and the means for applying force overlies the actuator member.

18. A control apparatus according to Claim 17 when dependent from Claim 12, wherein the further actuator overlies the valve.

19. A remote controller comprising a pair of control apparatuses, each according to any preceding claim, secured side by side.

20. A remote controller according to Claim 3 and Claim 19, including a common pivot for the respective rocker arms.

21. A remote controller according to Claim 19 or Claim 20 including a joystick handle having four pads respectively operatively engageable with the moveable link members and the further members of the pair of control apparatuses.
